# EUROPEAN PATENT SPECIFICATION

(11) **EP 4 131 081 B1**
(45) Date of publication and mention of the grant of the patent: **11.11.2026**
(21) Application number: 21788550.8
(22) Date of filing: 25.01.2021
(51) Int. Cl.: G06N 3/063, G06F 9/50

(54) **DEEP LEARNING MODEL TRAINING METHOD AND SYSTEM, DEVICE, AND MEDIUM**
VERFAHREN UND SYSTEM ZUM TRAINIEREN EINES MODELLS FÜR TIEFENLERNEN, VORRICHTUNG UND MEDIUM
PROCÉDÉ ET SYSTÈME D'ENTRAÎNEMENT DE MODÈLE D'APPRENTISSAGE PROFOND, DISPOSITIF ET SUPPORT

(30) Priority: 16.04.2020 CN 202010297962
(43) Date of publication of application: 08.02.2023
(73) Proprietor: Inspur Suzhou Intelligent Technology Co., Ltd., Suzhou, Jiangsu 215000 (CN)
(72) Inventor: ZHAO, Lianshui, Suzhou, Jiangsu 215000 (CN); WU, Shaohua, Suzhou, Jiangsu 215000 (CN)
(74) Representative: Schulz Junghans Patentanwälte PartGmbB
(86) International application number: PCT/CN2021/073654
(87) International publication number: WO 2021/208558

(56) References cited:
- CN-A- 105 224 502
- CN-A- 109 902 818
- CN-A- 109 976 903
- CN-A- 110 032 449
- CN-A- 110 942 138
- CN-A- 111 488 987
- US-A1- 2016 267 380
- US-A1- 2018 322 383
- HUANG CHIEN-CHIN ET AL: "SwapAdvisor Pushing Deep Learning Beyond the GPU Memory Limit via Smart Swapping", PROCEEDINGS OF THE TWENTY-FIFTH INTERNATIONAL CONFERENCE ON ARCHITECTURAL SUPPORT FOR PROGRAMMING LANGUAGES AND OPERATING SYSTEMS, ACM, NEW YORK, NY, USA, 9 March 2020 (2020-03-09), pages 1341 - 1355, XP058460514, ISBN: 978-1-4503-7102-5, DOI: 10.1145/3373376.3378530
- LINNAN WANG ET AL: "SuperNeurons: Dynamic GPU Memory Management for Training Deep Neural Networks", ARXIV.ORG, CORNELL UNIVERSITY LIBRARY, 201 OLIN LIBRARY CORNELL UNIVERSITY ITHACA, NY 14853, 13 January 2018 (2018-01-13), XP081206302, DOI: 10.1145/3178487.3178491
- TUNG D LE ET AL: "TFLMS: Large Model Support in TensorFlow by Graph Rewriting", ARXIV.ORG, CORNELL UNIVERSITY LIBRARY, 201 OLIN LIBRARY CORNELL UNIVERSITY ITHACA, NY 14853, 5 July 2018 (2018-07-05), XP081496817
- MENG CHEN ET AL: "Training Deeper Models by GPU Memory Optimization on TensorFlow", 1 January 2018 (2018-01-01), pages 1 - 8, XP093057588, Retrieved from the Internet <URL:http://learningsys.org/nips17/assets/papers/paper_18.pdf> [retrieved on 20230626]
- ALVARO DEVIN ET AL: "Improving TensorFlow's Memory Swapping by Prioritizing Earlier Tensors", 2019 INTERNATIONAL CONFERENCE OF ADVANCED INFORMATICS: CONCEPTS, THEORY AND APPLICATIONS (ICAICTA), IEEE, 20 September 2019 (2019-09-20), pages 1 - 5, XP033754235, DOI: 10.1109/ICAICTA.2019.8904300

## Description

### FIELD

The present disclosure relates to the field of deep learning, and more particularly to a deep learning model training method and system, a computer device, and a readable medium.

### BACKGROUND

Graphics Processing Unit (GPU) plays an increasingly important role in deep learning model training. This is mainly because it is suitable for highly parallel computing in large model training and training with a GPU consumes less energy than training with a Central Processing Unit (CPU). However, deep learning models become more and more structurally complex, and require increasingly large memories beyond existing memory specifications of commercial GPUs. As a result, deep learning models may not be trained on GPUs, and benefits brought by training with GPUs get meaningless.

In order to reduce the impact of current memory shortage of commercial GPUs, it is proposed to store tensors in the GPU by use of an abundant CPU memory. In large model training, unneeded tensors are moved from the GPU to the CPU, and needed tensors are moved from the CPU to the GPU at the right time. In order to maintain higher performance as much as possible, when the tensors are moved from the CPU back to the GPU, the carrying process is hidden in computation as much as possible to ensure that the needed tensors have been moved to the GPU before use. The existing solution has the following several shortcomings.
(1) A movement strategy is too rough, and all tensors are moved based on the same movement strategy. There is room for improvement of training performance.
(2) There may be a large number of parallel computable operations in the same topological layer in a computational graph, so a memory requirement may exceed a GPU memory. This condition is not considered in the existing solution.
(3) There may be multiple copies of some tensors in the GPU. This condition is also not considered in the existing solution. Huang Chien-Chin et al: "SwapAdvisor Pushing Deep Learning Beyond the GPU Memory Limit via Smart Swapping", PROCEEDINGS OF THE TWENTY-FIFTH INTERNATIONAL CONFERENCE ON ARCHITECTURAL SUPPORT FOR PROGRAMMING LANGUAGES AND OPERATING SYSTEMS, ACM, NEW YORK, NY, USA, 9 March 2020 (2020-03-09), pages 1341-1355, DOI: 10.1145/3373376.3378530, ISBN: 978-1-4503-7102-5 discloses a system to support swapping between GPU and CPU for training and inference of large deep neural network models.

### SUMMARY

The invention is set out in independent claims 1, 2 and 3. A more precise and accurate movement strategy is formulated depending on a precedence relationship of using tensors. The tensors are limited not to be moved to a GPU prematurely, so as to reduce the adverse impact brought by memory fragments. Operations in the same topological layer are reallocated to solve the problem of memory shortage caused by excessive parallel computing while ensuring maximum parallelism of each topological layer. The strategy that previous copies have been all used before the tensors are moved to the GPU is formulated, so as to solve the problem of excessive use of a GPU memory.

The present disclosure has the following beneficial effects. A more precise and accurate movement strategy is formulated depending on a precedence relationship of using the tensors. The tensors are limited not to be moved to the GPU prematurely, so as to reduce the adverse impact brought by memory fragments. Operations in the same topological layer are reallocated to solve the problem of memory shortage caused by excessive parallel computing while ensuring maximum parallelism of each topological layer. The strategy that previous copies have been all used before the tensors are moved to the GPU is formulated, so as to solve the problem of excessive use of a GPU memory.

### BRIEF DESCRIPTION OF THE DRAWINGS

In order to describe the technical solutions in the embodiments of the present disclosure or the prior art more clearly, the drawings required to be used in descriptions about the embodiments or the prior art will be introduced briefly below. Apparently, the drawings in the description below are only some embodiments of the present disclosure. Those ordinarily skilled in the art may further obtain other embodiments according to these drawings without creative work.
Fig. 1 is a schematic diagram of an embodiment of a deep learning model training method according to the present disclosure;
Fig. 2 is a schematic diagram of reallocating operations in a topological layer in an embodiment of a deep learning model training method according to the present disclosure;
Fig. 3 is a schematic diagram of a hardware structure of an embodiment of a computer device for a deep learning model training according to the present disclosure;
Fig. 4 is a schematic diagram of an embodiment of a deep learning model training system according to the present disclosure; and
Fig. 5 is a schematic diagram of a computer-readable storage medium according to the present disclosure.

### DETAILED DESCRIPTION

In order to make the objective, technical solutions, and advantages of the present disclosure clearer, the embodiments of the present disclosure will further be described below in detail in combination with specific embodiments and with reference to the drawings.

It is to be noted that all expressions made with "first", "second", etc., in the embodiments of the present disclosure are for distinguishing two different entities or parameters with the same name, and thus it can be seen that "first" and "second" are only for ease of description and should not be understood as limitations on the embodiments of the present disclosure. No descriptions are made thereto in the following embodiments.

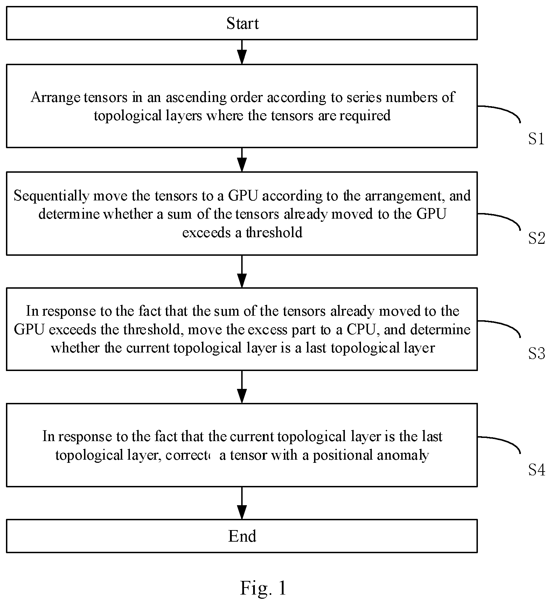

Based on the above objective, a first aspect of the embodiments of the present disclosure discloses an embodiment of a deep learning model training method. Fig. 1 is a schematic diagram of an embodiment of a deep learning model training method according to the present disclosure. As shown in Fig. 1, the embodiment of the present disclosure includes the following steps.

In S1, tensors are arranged in an ascending order according to series numbers of topological layers where the tensors are required.

In S2, the tensors are sequentially moved to a GPU according to the arrangement, and whether a sum of the tensors already moved to the GPU exceeds a threshold is determined.

In S3, in response to the fact that the sum of the tensors already moved to the GPU exceeds the threshold, the excess part is moved to a CPU, and whether the current topological layer is a last topological layer is determined.

In S4, in response to the fact that the current topological layer is the last topological layer, a tensor with a positional anomaly is corrected.

Tensors are arranged in an ascending order according to series numbers of topological layers where the tensors are required. For example, a first topological layer where tensor *a* is required is 6, a first topological layer where tensor *b* is required is 11, a first topological layer where tensor c is required is 13, and a first topological layer where tensor *d* is required is 15. In such case, an arrangement order of the tensors is *a*, *b, c, d.*

The tensors are sequentially moved to a GPU according to the order, and whether a sum of the tensors already moved to the GPU exceeds a threshold is determined. The tensors are sequentially moved to the GPU according to the order of *a*, *b, c, d,* and whether the sum of the tensors already moved to the GPU exceeds the threshold is determined in real time. The threshold may be, for example, 10 GB, a size of tensor *a* is 4 GB, a size of tensor *b* is 3 GB, a size of tensor c is 4 GB, and a size of tensor d is 3 GB. If tensor *a* and tensor *b* are moved to the GPU, because of 4+3<10, the sum of the tensors already moved to the GPU does not exceed the threshold. However, if tensor c is moved to the GPU furtherly, because of 4+3+4>10, the sum of the tensors already moved to the GPU exceeds the threshold.

In response to the fact that the sum of the tensors already moved to the GPU exceeds the threshold, the excess part is moved to a CPU, and whether the current topological layer is a last topological layer is determined. In the above example, the sum of the tensors already moved to the GPU exceeds the threshold if tensor c is moved to the GPU together, tensor c and tensor *d* may be moved to the CPU. In addition, whether the current topological layer is the last topological layer is determined.

In response to the fact that the current topological layer is the last topological layer, a tensor with a positional anomaly is corrected. The step that a tensor with a positional anomaly is corrected includes that: whether there is any tensor with a positional anomaly in the GPU is determined; in response to the fact that there is a tensor with a positional anomaly in the GPU, the tensor is deleted, and whether there is any tensor with a positional anomaly in the CPU is determined; and in response to the fact that there is a tensor with a positional anomaly in the CPU, the tensor is moved to the GPU.

The step that whether there is any tensor with a positional anomaly in the GPU is determined includes that: whether a position of the tensor in a next topological layer is in the CPU is determined. Positions of the same tensor in different topological layers may be different. For example, when tensor c is generated in layer 4, and a next topological layer where the tensor is required is 11, it is found by computing that tensor c is in the CPU in layers 6 and 8, and is in the GPU in layers 5, 7, 9, and 10. By this method, it is ensured that a tensor is more likely to be in the GPU when being closer to a layer where it is required, and the tensor needs to be arranged in the GPU in a previous layer of the layer where it is required. A standard for determining whether a position of a tensor is wrong is that it is currently in the GPU but a next position thereof is in the CPU, such as layers 5 and 7. From the above determined tensor positions, tensor c actually needs to be in the GPU in layers 9 and 10, and in layers 4, 5, and 7, tensor c needs to be in the CPU, but is regarded as being in the GPU, which is inconsistent with the actual situation. Therefore, tensor c is a tensor with a positional anomaly.

In response to the fact that there is a tensor with a positional anomaly in the GPU, the tensor is deleted, and whether there is any tensor with a positional anomaly in the CPU is determined. A basis for determining that a position of a tensor in the GPU may be earlier is that it is currently in the CPU but its next position is in the GPU, such as layers 6 and 8.

In response to the fact that there is a tensor with a positional anomaly in the CPU, the tensor is moved to the GPU. If there is a space in the GPU, and there is a tensor with a positional anomaly in the CPU, the tensor may be moved to the GPU.

There are many factors that affect the training performance, including not only whether tensors may be timely moved to the GPU but also whether an acceleration library in a Compute Unified Device Architecture (CUDA) (GPU-based computing platform launched by NVIDIA) Deep Neural Network (cuDNN) library of NVIDIA is fully used. If the tensors are moved to the GPU prematurely, it is likely to generate excessive memory fragments in the GPU, which makes an actual training process unstable. In addition, a spare memory in the GPU is very limited, which is not conducive to application of a faster algorithm in the cuDNN, reducing the performance. Analysis on a large number of experimental results show that setting time of moving the tensors back to the GPU to be not earlier than first 100 topological layers where the tensors are required may generally achieve relatively high performance.

In response to the fact that there is no tensor with a positional anomaly in the GPU, whether a memory required by the topological layer exceeds a memory capacity of the GPU is determined. In response to the fact that the memory required by the topological layer exceeds the memory capacity of the GPU, operations in the topological layer are reallocated. In a computational graph, parallel computing may be performed for operations in each topological layer. However, if there are many parallel computations at the same time, a required memory may exceed a memory capacity of the GPU, and thus there may be brought the problem that a model may not be trained on the GPU. In order to solve the problem of excessive memory requirement of parallel computing, maximum allowed parallelism of each topological layer may be controlled to make the memory requirement not higher than a certain threshold.

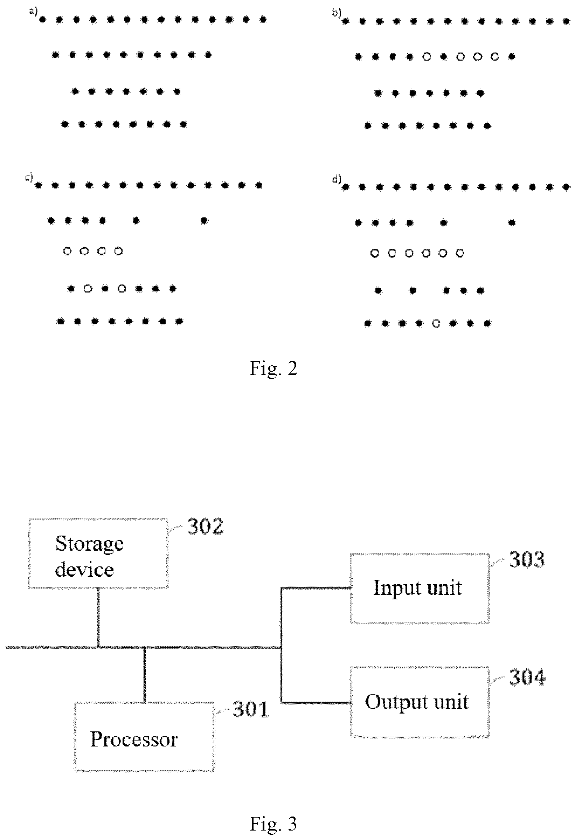

The step that operations in the topological layer are reallocated includes that: a new topological layer is created, and an operation beyond the memory capacity of the GPU in the original topological layer and an operation unassociated with the operation beyond the memory capacity of the GPU in a next topological layer are moved to the new topological layer. Fig. 2 is a schematic diagram of reallocating operations in a topological layer. As shown in Fig. 2, a) shows original topological layers of a computational graph, wherein all black nodes in each layer represent parallel computable operations. It is found by memory computing that parallel computing of the first layer does not exceed a set threshold, and thus parallelism of the first layer needs not to be reallocated. When the second layer is computed, it is found that only part of operations may be retained in the second layer, such as black nodes in the second layer in b); and the other four nodes (circles in the second layer) need to be allocated to a new layer, as shown in c), and the four operations are allocated to a new topological layer. In order to achieve maximum parallelism of the new topological layer, operations independent of the previous four operations in the original third layer may be moved to the new topological layer. As shown in c), two operations (circles) in the original third layer are allocated to the new topological layer, as shown in d). Since two operations in the original third layer are allocated to the new topological layer, to achieve maximum parallelism of the third layer, operations independent of the operations in the third layer may be allocated to the third layer. As shown in d), one operation (circle) may be allocated to the third layer. In order to achieve maximum parallelism of each other layer, the above steps may be performed on each layer. At this point, the new topological layer includes six operations. If their memory requirement does not exceed the threshold, the six operations finally form the new topological layer. If their memory requirement exceeds the threshold, the steps for the second layer are performed to implement reallocation.

In the GPU, there may be multiple copies for the same tensor. As a result, the GPU memory is used excessively, which is prone to memory shortage of the GPU. For example, the same tensor is used for operations 1 to 4, but the tensor is moved to the GPU by different actions of movement. If operations 1 to 3 are not completed at the beginning of operation 4, there are two copies of the tensor in the GPU, resulting in excessive use of the GPU memory and even memory shortage. In order to solve this problem, the copy for operation 4 may be forcibly started to be moved to the GPU after operations 1 to 3 are completed.

According to the embodiment of the present disclosure, movement of each tensor is planned according to the idea that a tensor may be moved to the GPU first if being used earlier, whereby maximization of performance is ensured. The tensors are limited not to be moved to a GPU prematurely, so as to reduce the adverse impact brought by memory fragments. The same topological layer is limited to reallocate topological layers with excessive parallel computing while ensuring the maximum parallelism of each topological layer, so as to solve the problem of GPU memory shortage caused by excessive parallel computing in the same topological layer. According to the present disclosure, the measure that previous copies have been all used before the tensors are moved to the GPU is formulated, so as to solve the problem of existence of multiple copies of the same tensor in the GPU and avoid excessive use of the GPU memory.

It is to be particularly pointed out that the steps in each embodiment of the deep learning model training method may be mutually intersected, replaced, added, and deleted. Therefore, these reasonable permutations, combinations, and transformations about the deep learning model training method shall also fall within the scope of protection of the present disclosure, and the scope of protection of the present disclosure should not be limited to the embodiments.

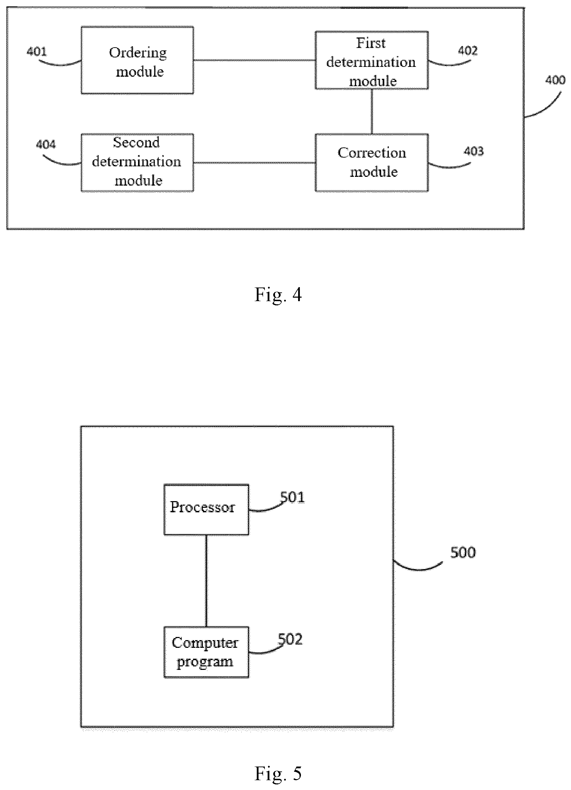

Based on the above objective, a second aspect of the embodiments of the present disclosure discloses a deep learning model training system 400, as shown in Fig. 4, including: an ordering module 401, configured to arrange tensors in an ascending order according to series numbers of topological layers where the tensors are required; a first determination module 402, configured to sequentially move the tensors to a GPU according to the arrangement, and determine whether a sum of the tensors already moved to the GPU exceeds a threshold; a second determination module 403, configured to, in response to the fact that the sum of the tensors already moved to the GPU exceeds the threshold, move the excess part to a CPU, and determine whether a current topological layer is a last topological layer; and a correction module 404, configured to, in response to the fact that the current topological layer is the last topological layer, correct a tensor with a positional anomaly.

The correction module 404 is further configured to: determine whether there is any tensor with a positional anomaly in the GPU; in response to the fact that there is a tensor with a positional anomaly in the GPU, delete the tensor, and determine whether there is any tensor with a positional anomaly in the CPU; and in response to the fact that there is a tensor with a positional anomaly in the CPU, move the tensor to the GPU.

The system 400 further includes a third determination module, configured to, in response to the fact that there is no tensor with a positional anomaly in the GPU, determine whether a memory required by the topological layer exceeds a memory capacity of the GPU, and in response to the fact that the memory required by the topological layer exceeds the memory capacity of the GPU, reallocate operations in the topological layer.

The third determination module is further configured to create a new topological layer, and transfer an operation beyond the memory capacity of the GPU in the original topological layer and an operation unassociated with the operation beyond the memory capacity of the GPU in a next topological layer to the new topological layer.

Based on the above objective, a third aspect of the embodiments of the present disclosure discloses a computer device, including: at least one processor; and a memory, storing a computer instruction capable of running in the processor. The instruction is executed by the processor to implement the following steps: S1: arranging tensors in an ascending order according to series numbers of topological layers where the tensors are required; S2: sequentially moving the tensors to a GPU according to the arrangement, and determining whether a sum of the tensors already moved to the GPU exceeds a threshold; S3: in response to the fact that the sum of the tensors already moved to the GPU exceeds the threshold, moving the excess part to a CPU, and determining whether a current topological layer is a last topological layer; and S4: in response to the fact that the current topological layer is the last topological layer, correcting a tensor with a positional anomaly.

The correcting a tensor with a positional anomaly includes: determining whether there is any tensor with a positional anomaly in the GPU; in response to the fact that there is a tensor with a positional anomaly in the GPU, deleting the tensor, and determining whether there is any tensor with a positional anomaly in the CPU; and in response to the fact that there is a tensor with a positional anomaly in the CPU, moving the tensor to the GPU.

The following steps are further included: in response to the fact that there is no tensor with a positional anomaly in the GPU, determining whether a memory required by the topological layer exceeds a memory capacity of the GPU; and in response to the fact that the memory required by the topological layer exceeds the memory capacity of the GPU, reallocating operations in the topological layer.

The reallocating operations in the topological layer includes: creating a new topological layer, and transferring an operation beyond the memory capacity of the GPU in the original topological layer and an operation unassociated with the operation beyond the memory capacity of the GPU in a next topological layer to the new topological layer.

Fig. 3 is a schematic diagram of a hardware structure of an embodiment of the computer device for deep learning model training according to the present disclosure.

Taking the device shown in Fig. 3 as an example, the device includes a processor 301 and a storage device 302, and may further include an input unit 303 and an output unit 304.

The processor 301, the storage device 302, the input unit 303, and the output unit 304 may be connected by a bus or other manners. Fig. 3 takes connection by a bus as an example.

As a nonvolatile computer-readable storage medium, the storage device 302 may be used to store a nonvolatile software program, a nonvolatile computer-executable program, and a module, e.g., a program instruction/module corresponding to the deep learning model training method in the embodiments of the present application. The processor 301 runs the nonvolatile software program, instruction, and module stored in the storage device 302, so as to execute various types of function applications and data processing of a server, namely implementing the deep learning model training method of the method embodiment.

The storage device 302 may include a program storage region and a data storage region. The program storage region may store an operating system and an application program required by at least one function. The data storage region may store data created according to the use of the deep learning model training method, etc. In addition, the storage device 302 may include a high-speed Random Access Memory (RAM), or a nonvolatile memory, such as at least one disk storage device, flash storage device, or another volatile solid-state storage device. In some embodiments, the storage device 302 in some embodiments includes a memory arranged remotely relative to the processor 301, and the remote memory may be connected to a local module through a network. Examples of the network include, but not limited to, the Internet, an intranet of an enterprise, a local area network, a mobile communication network, and a combination thereof.

The input unit 303 may receive input information, such as a user name and a password. The output unit 304 may include a display device, such as a display screen.

On or more program instructions/modules corresponding to the deep learning model training method are stored in the storage device 302, and are executed by the processor 301 to perform the deep learning model training method in any above-mentioned method embodiment.

In any embodiment of the computer device that performs the deep learning model training method, effects the same as or similar to those in any corresponding method embodiment may be achieved.

The present disclosure also provides a computer-readable storage medium 500. As shown in Fig. 5, the computer-readable storage medium 500 stores a computer program 502 that is executed by a processor 501 to perform the above method.

It is finally to be noted that those ordinarily skilled in the art can understand that all or part of the processes in the method of the above-mentioned embodiment may be completed by a computer program by instructing related hardware. The program for the deep learning model training method may be stored in a computer-readable storage medium. When the program is executed, the processes of each method embodiment may be included. The storage medium that stores the program may be a magnetic disk, an optical disk, a Read-Only Memory (ROM), a RAM, etc. The embodiment of the computer program may have effects the same as or similar to those in any corresponding method embodiment.

In addition, the method disclosed according to the embodiments of the present disclosure may also be implemented as a computer program executed by a processor. The computer program may be stored in a computer-readable storage medium. When the computer program is executed by the processor, the functions defined in the method disclosed in the embodiments of the present disclosure are executed.

Moreover, each method step and system unit may also be implemented by a controller and a computer-readable storage medium configured to store a computer program that enables the controller to implement the steps or functions of the units.

Furthermore, it is to be understood that the computer-readable storage medium (such as a memory) herein may be a volatile memory or a nonvolatile memory, or may include both a volatile memory and a nonvolatile memory. As an example rather than restriction, the nonvolatile memory may be a ROM, a Programmable ROM (PROM), an Erasable PROM (EPROM), an Electrically EPROM (EEPROM), or a flash memory. The volatile memory may include a RAM that may be used as an external cache memory. As an example rather than restriction, the RAM may be obtained in various forms, such as a Dynamic RAM (DRAM), a Synchronous DRAM (SDRAM), a Double Data Rate SDRAM (DDR SDRAM), an Enhanced SDRAM (ESDRAM), a Synchronous Link DRAM (SLDRAM), and a Direct Rambus RAM (DRRAM). The storage device in the disclosed aspect is intended to include, but not limited to, these or other proper types of memories. The storage device in the disclosed aspect is intended to include, but not limited to, these or other proper types of memories.

It is also understood by those skilled in the art that various exemplary logic blocks, modules, circuits, and algorithm steps described in combination with the disclosure herein may be implemented as electronic hardware, computer software, or a combination thereof. For ease of description about such interchangeability of hardware and software, functions of various schematic components, blocks, modules, circuits, and steps are described generally. Whether these functions are implemented as software or hardware depends on specific applications and design constraints on the whole system. Those skilled in the art may realize the functions for each specific application in various manners, but such realization should not be explained as resulting in departure from the scope disclosed in the embodiment of the present disclosure.

Various exemplary logical blocks, modules, and circuits described in combination with the disclosure herein may be implemented or executed by the following components designed to execute the functions herein: a general-purpose processor, a Digital Signal Processor (DSP), an Application Specific Integrated Circuit (ASIC), a Field Programmable Gate Array (FPGA) or another programmable logic device, a discrete gate or transistor logic, a discrete hardware component, or any combination thereof. The general-purpose processor may be a microprocessor. Alternatively, the processor may be any conventional processor, controller, microcontroller, or state machine. Alternatively, the processor may be implemented as a combination of computing devices, such as a combination of a DSP and a microprocessor, multiple microprocessors, a combination of one or more microprocessors and a DSP, and/or any other such configuration.

The steps of the method or algorithm described in combination with the disclosure herein may be directly included in hardware, a software module executed by the processor, or a combination thereof. The software module may be located in a RAM, a flash memory, a ROM, an EPROM, an EEPROM, a register, a hard disk, a removable disk, a Compact Disc ROM (CD-ROM), or a storage medium of any other form well known in this art. The storage medium is exemplarily coupled to the processor such that the processor may read information from the storage medium or write information to the storage medium. In an alternative solution, the storage medium may be integrated with the processor. The processor and the storage medium may be located in an ASIC. The ASIC may be located in a user terminal. In an alternative solution, the processor and the storage medium may be located in a user terminal as discrete components.

In one or more exemplary designs, the function may be realized in hardware, software, firmware, or any combination thereof. If being realized in software, the function may be stored in a computer-readable medium or transmitted through the computer-readable medium as one or more instructions or codes. The computer-readable medium includes a computer storage medium and a communication medium. The communication medium includes any medium that helps transmit a computer program from one position to another. The storage medium may be any available medium accessible for a general-purpose or special-purpose computer. As an example rather than restriction, the computer-readable medium may include a RAM, a ROM, an EEPROM, a CD-ROM or another optical disc storage device, a disk storage device or another magnetic storage device, or any other medium available for carrying or storing a needed program code in form of an instruction or a data structure and accessible for a general-purpose or special-purpose computer or a general-purpose or special-purpose processor. In addition, any connection may be referred to as a computer-readable medium as appropriate. For example, if a coaxial cable, a fiber optic cable, a twisted pair, a Digital Subscriber Line (DSL), or a wireless technology like infrared, radio, and microwave is used to send software from a website, a server, or another remote source, the coaxial cable, the fiber optic cable, the twisted pair, the DSL, or the wireless technology like infrared, radio, and microwave is included in the definition of the medium. As used herein, the magnetic disk and the optical disc include a Compact Disc (CD), a laser disc, an optical disc, a Digital Versatile Disc (DVD), a floppy disc, and a blue-ray disc. Generally, the magnetic disk magnetically reproduces data, while the optical disc optically reproduces data using laser. Combinations of the above-mentioned contents should also be included in the scope of the computer-readable medium.

The above is the exemplary embodiment disclosed in the present disclosure. However, it is to be noted that various variations and modifications may be made without departing from the scope defined in the claims and disclosed in the embodiments of the present disclosure. The functions, steps, and/or actions in the method claims according to the disclosed embodiments described herein are not required to be executed in any specific sequence. In addition, the element disclosed in the embodiments of the present disclosure may be described or required in an individual form, but may be understood as a plural form, unless clearly limited to a singular form.

It is to be understood that, as used herein, the singular form "a/an" is intended to include the plural form also, unless exceptional cases are supported clearly in the context. It is also to be understood that "and/or" used herein refers to including any or all possible combinations of one or more than one item that is listed associatively.

The sequence numbers of the embodiments of the present disclosure are only for description and do not represent superiority-inferiority of the embodiments.

It can be understood by those ordinarily skilled in the art that all or part of the steps of the above-mentioned embodiments may be completed by hardware, or by a program by instructing related hardware. The program may be stored in a computer-readable storage medium. The above-mentioned storage medium may be a ROM, a magnetic disk, an optical disk, or the like.

## Claims

1. A deep learning model training method, carried out by a computer device, the method comprising performing the following steps on each topological layer:
arranging tensors in an ascending order according to series numbers of topological layers where the tensors are required;
sequentially moving the tensors to a Graphics Processing Unit, GPU, according to the arrangement, and determining whether a sum of the tensors already moved to the GPU exceeds a threshold;
in response to a sum of a size of the tensors already moved to the GPU exceeding the threshold, moving an excess part to a Central Processing Unit, CPU, and determining whether a current topological layer is a last topological layer; and
in response to the current topological layer being the last topological layer, correcting a tensor with a positional anomaly;
wherein the correcting a tensor with a positional anomaly comprises:
determining whether there is any tensor with a positional anomaly in the GPU;
in response to there being a tensor with a positional anomaly in the GPU, deleting the tensor, and determining whether there is any tensor with a positional anomaly in the CPU; and
determining whether there is a space in the GPU; and
in response to there being the space in the GPU, moving the tensor to the GPU;
wherein the determining whether there is any tensor with a positional anomaly in the GPU comprises: determining whether a position of the tensor in a next topological layer is in the CPU ; and
wherein a basis for determining that a position of a tensor in the GPU may be earlier is that it is currently in the CPU but a next position thereof is in the GPU;
wherein the method further comprises:
in response to there being no tensor with a positional anomaly in the GPU, determining whether a memory required by the topological layer exceeds a memory capacity of the GPU;
in response to the memory required by the topological layer exceeding the memory capacity of the GPU, reallocating operations in the topological layer;
wherein the reallocating operations in the topological layer comprises: creating a new topological layer, and transferring an operation beyond the memory capacity of the GPU in the original topological layer and an operation unassociated with the operation beyond the memory capacity of the GPU in a next topological layer to the new topological layer; and
wherein the method further comprises:
moving tensors to the GPU after determining that copies in the GPU have been used out.

2. A computer device, comprising:
at least one processor; and
a storage device, storing instructions which, when executed by the at least one processor, cause the at least one processor to perform operations comprising performing the following steps on each topological layer:
arranging tensors in an ascending order according to series numbers of topological layers where the tensors are required;
sequentially moving the tensors to a Graphics Processing Unit, GPU, according to the arrangement, and determining whether a sum of the tensors already moved to the GPU exceeds a threshold;
in response to a sum of a size of the tensors already moved to the GPU exceeding the threshold, moving an excess part to a Central Processing Unit, CPU, and determining whether a current topological layer is a last topological layer; and
in response to the current topological layer being the last topological layer, correcting a tensor with a positional anomaly;
wherein the correcting a tensor with a positional anomaly comprises:
determining whether there is any tensor with a positional anomaly in the GPU;
in response to there being a tensor with a positional anomaly in the GPU, deleting the tensor, and determining whether there is any tensor with a positional anomaly in the CPU; and
determining whether there is a space in the GPU; and
in response to there being the space in the GPU, moving the tensor to the GPU;
wherein the determining whether there is any tensor which has an opportunity to be in the GPU earlier comprises: determining whether a position of the tensor in a next topological layer is in the CPU ; and
wherein a basis for determining that a position of a tensor in the GPU may be earlier is that it is currently in the CPU but a next position thereof is in the GPU; and
wherein the operations further comprise:
in response to there being no tensor with a positional anomaly in the GPU, determining whether a memory required by the topological layer exceeds a memory capacity of the GPU; in response to the memory required by the topological layer exceeding the memory capacity of the GPU, reallocating operations in the topological layer;
wherein the reallocating operations in the topological layer comprises: creating a new topological layer; transferring an operation beyond the memory capacity of the GPU in the original topological layer and an operation unassociated with the operation beyond the memory capacity of the GPU in a next topological layer to the new topological layer; and
wherein the operations further comprise: moving tensors to the GPU after determining that copies in the GPU have been used out.

3. A computer-readable storage medium comprising instructions which, when executed by a processor, cause the processor to perform operations comprising performing the following steps on each topological layer:
arranging tensors in an ascending order according to series numbers of topological layers where the tensors are required;
sequentially moving the tensors to a Graphics Processing Unit, GPU, according to the arrangement, and determining whether a sum of the tensors already moved to the GPU exceeds a threshold;
in response to a sum of a size of the tensors already moved to the GPU exceeding the threshold, moving an excess part to a Central Processing Unit, CPU, and determining whether a current topological layer is a last topological layer; and
in response to the current topological layer being the last topological layer, correcting a tensor with a positional anomaly;
wherein the correcting a tensor with a positional anomaly comprises:
determining whether there is any tensor with a positional anomaly in the GPU;
in response to there being a tensor with a positional anomaly in the GPU, deleting the tensor , and determining whether there is any tensor with a positional anomaly in the CPU; and
determining whether there is a space in the GPU; and
in response to there being the space in the GPU, moving the tensor to the GPU;
wherein the determining whether there is any tensor with a positional anomaly in the GPU comprises: determining whether a position of the tensor in a next topological layer is in the CPU ; and
wherein a basis for determining that a position of a tensor in the GPU may be earlier is that it is currently in the CPU but a next position thereof is in the GPU;
wherein the operations further comprise:
in response to there being no tensor with a positional anomaly in the GPU, determining whether a memory required by the topological layer exceeds a memory capacity of the GPU; in response to the memory required by the topological layer exceeding the memory capacity of the GPU, reallocating operations in the topological layer;
wherein the reallocating operations in the topological layer comprises:
creating a new topological layer; transferring an operation beyond the memory capacity of the GPU in the original topological layer and an operation unassociated with the operation beyond the memory capacity of the GPU in a next topological layer to the new topological layer; and
wherein the operations further comprise: moving tensors to the GPU after determining that copies in the GPU have been used out.

## Patentansprüche

1. Verfahren zum Trainieren eines Deep-Learning-Modells, das von einer Computervorrichtung ausgeführt wird, wobei das Verfahren die Durchführung der folgenden Schritte auf jeder topologischen Schicht umfasst:
Anordnen von Tensoren in aufsteigender Reihenfolge entsprechend den fortlaufenden Nummern der topologischen Schichten, auf denen die Tensoren benötigt werden;
sequenzielles Verschieben der Tensoren gemäß dieser Anordnung an eine Grafikprozessoreinheit, GPU, und Bestimmen, ob die Summe der bereits an die GPU verschobenen Tensoren einen Schwellenwert überschreitet;
als Antwort darauf, dass die Summe der Größe der bereits zur GPU verschobenen Tensoren den Schwellenwert überschreitet, Verschieben eines überschüssigen Teils zu einer Zentralprozessoreinheit, CPU, und Bestimmen, ob eine aktuelle topologische Schicht die letzte topologische Schicht ist; und
als Antwort darauf, dass die aktuelle topologische Schicht die letzte topologische Schicht ist, Korrigieren eines Tensors mit einer Positionsanomalie;
wobei das Korrigieren eines Tensors mit einer Positionsanomalie umfasst:
Feststellen, ob sich in der GPU ein Tensor mit einer Positionsanomalie befindet;
als Antwort darauf, dass sich ein Tensor mit einer Positionsanomalie in der GPU befindet, Löschen des Tensors und Bestimmen, ob sich ein Tensor mit einer Positionsanomalie in der CPU befindet; und
Bestimmen, ob in der GPU Speicherplatz vorhanden ist; und
als Antwort darauf, dass in der GPU Speicherplatz vorhanden ist, Verschieben des Tensors in die GPU; wobei das Bestimmen, ob sich ein Tensor mit einer Positionsanomalie in der GPU befindet, Folgendes umfasst: Feststellen, ob sich eine Position des Tensors in einer nächsten topologischen Schicht in der CPU befindet; und
wobei eine Grundlage für die Feststellung, dass eine Position eines Tensors in der GPU früher liegen könnte, darin besteht, dass er sich derzeit in der CPU befindet, seine nächste Position jedoch in der GPU liegt;
wobei das Verfahren ferner umfasst:
als Antwort darauf, dass sich kein Tensor mit einer Positionsanomalie in der GPU befindet, das Bestimmen, ob ein von der topologischen Schicht benötigter Speicher die Speicherkapazität der GPU überschreitet; als Antwort darauf, dass der von der topologischen Schicht benötigte Speicher die Speicherkapazität der GPU überschreitet, das Neuzuweisen von Operationen in der topologischen Schicht;
wobei die Neuzuweisung von Operationen in der topologischen Schicht umfasst: das Erstellen einer neuen topologischen Schicht und das Übertragen einer Operation, die die Speicherkapazität der GPU in der ursprünglichen topologischen Schicht überschreitet, sowie einer Operation, die nicht mit der die Speicherkapazität der GPU überschreitenden Operation in einer nächsten topologischen Schicht assoziiert ist, in die neue topologische Schicht; und
wobei das Verfahren ferner umfasst: das Verschieben von Tensoren in die GPU, nachdem festgestellt wurde, dass Kopien in der GPU aufgebraucht sind.

2. Eine Computervorrichtung, umfassend:
mindestens einen Prozessor; und
eine Speichervorrichtung, die Befehle speichert, die, wenn sie von dem mindestens einen Prozessor ausgeführt werden, bewirken, dass der mindestens eine Prozessor Operationen ausführt, die die Durchführung der folgenden Schritte auf jeder topologischen Schicht umfassen:
Anordnen von Tensoren in aufsteigender Reihenfolge entsprechend den fortlaufenden Nummern der topologischen Schichten, auf denen die Tensoren benötigt werden;
sequenzielles Verschieben der Tensoren gemäß dieser Anordnung an eine Grafikprozessoreinheit, GPU, und Bestimmen, ob eine Summe der bereits an die GPU verschobenen Tensoren einen Schwellenwert überschreitet;
als Antwort darauf, dass die Summe der Größe der bereits an die GPU verschobenen Tensoren den Schwellenwert überschreitet, das Verschieben eines überschüssigen Teils an eine Zentralprozessoreinheit, CPU, und das Bestimmen, ob eine aktuelle topologische Schicht die letzte topologische Schicht ist; und
als Antwort darauf, dass die aktuelle topologische Schicht die letzte topologische Schicht ist, das Korrigieren eines Tensors mit einer Positionsanomalie;
wobei das Korrigieren eines Tensors mit einer Positionsanomalie Folgendes umfasst:
Feststellen, ob sich in der GPU ein Tensor mit einer Positionsanomalie befindet;
als Antwort darauf, dass sich in der GPU ein Tensor mit einer Positionsanomalie befindet, Löschen des Tensors und Bestimmen, ob sich in der CPU ein Tensor mit einer Positionsanomalie befindet; und
Feststellen, ob in der GPU Speicherplatz vorhanden ist; und
als Antwort darauf, dass in der GPU Speicherplatz vorhanden ist, Verschieben des Tensors in die GPU;
wobei das Feststellen, ob ein Tensor vorhanden ist, der die Möglichkeit hat, sich früher in der GPU zu befinden, Folgendes umfasst: Feststellen, ob sich eine Position des Tensors in einer nächsten topologischen Schicht in der CPU befindet; und
wobei eine Grundlage für die Feststellung, dass sich eine Position eines Tensors in der GPU früher liegen könnte, darin besteht, dass er sich derzeit in der CPU befindet, seine nächste Position jedoch in der GPU liegt; und
wobei die Vorgänge ferner Folgendes umfassen:
als Antwort darauf, dass sich kein Tensor mit einer Positionsanomalie in der GPU befindet, das Bestimmen, ob der von der topologischen Schicht benötigte Speicher die Speicherkapazität der GPU überschreitet; als Antwort darauf, dass der von der topologischen Schicht benötigte Speicher die Speicherkapazität der GPU überschreitet, das Neuzuweisen von Operationen in der topologischen Schicht;
wobei die Neuzuweisung von Operationen in der topologischen Schicht umfasst: das Erstellen einer neuen topologischen Schicht; das Übertragen einer Operation, die die Speicherkapazität der GPU in der ursprünglichen topologischen Schicht überschreitet, sowie einer Operation, die nicht mit der die Speicherkapazität der GPU überschreitenden Operation in einer nächsten topologischen Schicht in Verbindung steht, in die neue topologische Schicht; und
wobei die Operationen ferner umfassen: das Verschieben von Tensoren in die GPU, nachdem festgestellt wurde, dass Kopien in der GPU aufgebraucht sind.

3. Ein computerlesbares Speichermedium, das Befehle enthält, die, wenn sie von einem Prozessor ausgeführt werden, den Prozessor veranlassen, Operationen durchzuführen, die die Ausführung der folgenden Schritte auf jeder topologischen Ebene umfassen:
Anordnen von Tensoren in aufsteigender Reihenfolge entsprechend den Seriennummern der topologischen Ebenen, auf denen die Tensoren benötigt werden;
sequenzielles Verschieben der Tensoren gemäß dieser Anordnung zu einer Grafikprozessoreinheit, GPU, und Bestimmen, ob eine Summe der bereits zur GPU verschobenen Tensoren einen Schwellenwert überschreitet;
als Antwort darauf, dass die Summe der Größe der bereits an die GPU übertragenen Tensoren den Schwellenwert überschreitet, den überschüssigen Teil an eine Zentraleinheit, CPU, zu übertragen und Bestimmen, ob die aktuelle topologische Schicht die letzte topologische Schicht ist; und
als Antwort darauf, dass die aktuelle topologische Schicht die letzte topologische Schicht ist, Korrigieren eines Tensors mit einer Positionsanomalie;
wobei das Korrigieren eines Tensors mit einer Positionsanomalie Folgendes umfasst:
Feststellen, ob sich in der GPU ein Tensor mit einer Positionsanomalie befindet;
als Antwort darauf, dass sich ein Tensor mit einer Positionsanomalie in der GPU befindet, das Löschen des Tensors und das Bestimmen, ob sich in der CPU ein Tensor mit einer Positionsanomalie befindet; und
Bestimmen, ob in der GPU Speicherplatz vorhanden ist; und
als Antwort darauf, dass in der GPU Speicherplatz vorhanden ist, das Verschieben des Tensors in die GPU; wobei das Bestimmen, ob sich in der GPU ein Tensor mit einer Positionsanomalie befindet, Folgendes umfasst: Feststellen, ob sich eine Position des Tensors in einer nächsten topologischen Schicht in der CPU befindet; und wobei eine Grundlage für die Feststellung, dass eine Position eines Tensors in der GPU früher liegen könnte, darin besteht, dass er sich derzeit in der CPU befindet, seine nächste Position jedoch in der GPU liegt; wobei die Vorgänge ferner umfassen:
als Antwort darauf, dass sich kein Tensor mit einer Positionsanomalie in der GPU befindet, das Bestimmen, ob der von der topologischen Schicht benötigte Speicher die Speicherkapazität der GPU überschreitet; als Antwort darauf, dass der von der topologischen Schicht benötigte Speicher die Speicherkapazität der GPU überschreitet, das Neuzuweisen von Operationen in der topologischen Schicht;
wobei die Neuzuweisung von Operationen in der topologischen Schicht Folgendes umfasst:
Erstellen einer neuen topologischen Schicht; Übertragen einer Operation, die die Speicherkapazität der GPU in der ursprünglichen topologischen Schicht überschreitet, sowie einer Operation, die nicht mit der die Speicherkapazität der GPU überschreitenden Operation in einer nächsten topologischen Schicht in Verbindung steht, in die neue topologische Schicht; und
wobei die Vorgänge ferner Folgendes umfassen: Verschieben von Tensoren in die GPU, nachdem festgestellt wurde, dass Kopien in der GPU aufgebraucht sind.

## Revendications

1. Procédé d'entraînement de modèle d'apprentissage profond, mis en œuvre par un dispositif informatique, le procédé comprenant la mise en œuvre des étapes suivantes sur chaque couche topologique :
l'agencement de tenseurs dans un ordre croissant selon des numéros de série de couches topologiques où les tenseurs sont requis ;
le déplacement de manière séquentielle des tenseurs vers une unité de traitement graphique, GPU, selon l'agencement, et le fait de déterminer si une somme des tenseurs déjà déplacés vers la GPU dépasse un seuil ;
en réponse au fait qu'une somme d'une taille des tenseurs déjà déplacés vers la GPU dépasse le seuil, le déplacement d'une partie excédentaire vers une unité centrale de traitement, CPU, et le fait de déterminer si une couche topologique actuelle est une dernière couche topologique ; et
en réponse au fait que la couche topologique actuelle est la dernière couche topologique, la correction d'un tenseur avec une anomalie de position ;
dans lequel la correction d'un tenseur avec une anomalie de position comprend :
le fait de déterminer s'il y a un quelconque tenseur avec une anomalie de position dans la GPU ;
en réponse au fait qu'il y a un tenseur avec une anomalie de position dans la GPU, la suppression du tenseur, et le fait de déterminer s'il y a un quelconque tenseur avec une anomalie de position dans la CPU ; et
le fait de déterminer s'il y a un espace dans la GPU ; et
en réponse au fait qu'il y a l'espace dans la GPU, le déplacement du tenseur vers la GPU ;
dans lequel le fait de déterminer s'il y a un quelconque tenseur avec une anomalie de position dans la GPU comprend : le fait de déterminer si une position du tenseur dans une couche topologique suivante est dans la CPU ; et
dans lequel une base pour la détermination du fait qu'une position d'un tenseur dans la GPU peut être antérieure est qu'elle est actuellement dans la CPU mais qu'une position suivante de celle-ci est dans la GPU ;
dans lequel le procédé comprend en outre :
en réponse au fait qu'il n'y a pas de tenseur avec une anomalie de position dans la GPU, le fait de déterminer si une mémoire requise par la couche topologique dépasse une capacité de mémoire de la GPU ;
en réponse au fait que la mémoire requise par la couche topologique dépasse la capacité de mémoire de la GPU, la réaffectation d'opérations dans la couche topologique ;
dans lequel la réaffectation d'opérations dans la couche topologique comprend : la création d'une nouvelle couche topologique, et le transfert d'une opération dépassant la capacité de mémoire de la GPU dans la couche topologique d'origine et d'une opération non associée à l'opération dépassant la capacité de mémoire de la GPU dans une couche topologique suivante vers la nouvelle couche topologique ; et
dans lequel le procédé comprend en outre :
le déplacement de tenseurs vers la GPU après la détermination du fait que des copies dans la GPU ont été épuisées.

2. Dispositif informatique, comprenant :
au moins un processeur ; et
un dispositif de stockage stockant des instructions qui, lorsqu'elles sont exécutées par l'au moins un processeur, amènent l'au moins un processeur à mettre en œuvre des opérations comprenant la mise en œuvre des étapes suivantes sur chaque couche topologique :
l'agencement de tenseurs dans un ordre croissant selon des numéros de série de couches topologiques où les tenseurs sont requis ;
le déplacement de manière séquentielle des tenseurs vers une unité de traitement graphique, GPU, selon l'agencement, et le fait de déterminer si une somme des tenseurs déjà déplacés vers la GPU dépasse un seuil ;
en réponse au fait qu'une somme d'une taille des tenseurs déjà déplacés vers la GPU dépasse le seuil, le déplacement d'une partie excédentaire vers une unité centrale de traitement, CPU, et le fait de déterminer si une couche topologique actuelle est une dernière couche topologique ; et
en réponse au fait que la couche topologique actuelle est la dernière couche topologique, la correction d'un tenseur avec une anomalie de position ;
dans lequel la correction d'un tenseur avec une anomalie de position comprend :
le fait de déterminer s'il y a un quelconque tenseur avec une anomalie de position dans la GPU ;
en réponse au fait qu'il y a un tenseur avec une anomalie de position dans la GPU, la suppression du tenseur, et le fait de déterminer s'il y a un quelconque tenseur avec une anomalie de position dans la CPU ; et
le fait de déterminer s'il y a un espace dans la GPU ; et
en réponse au fait qu'il y a l'espace dans la GPU, le déplacement du tenseur vers la GPU ;
dans lequel le fait de déterminer s'il y a un quelconque tenseur qui a une opportunité d'être dans la GPU antérieurement comprend : le fait de déterminer si une position du tenseur dans une couche topologique suivante est dans la CPU ; et
dans lequel une base pour la détermination du fait qu'une position d'un tenseur dans la GPU peut être antérieure est qu'elle est actuellement dans la CPU mais qu'une position suivante de celle-ci est dans la GPU ; et
dans lequel les opérations comprennent en outre :
en réponse au fait qu'il n'y a pas de tenseur avec une anomalie de position dans la GPU, le fait de déterminer si une mémoire requise par la couche topologique dépasse une capacité de mémoire de la GPU ;
en réponse au fait que la mémoire requise par la couche topologique dépasse la capacité de mémoire de la GPU, la réaffectation d'opérations dans la couche topologique ;
dans lequel la réaffectation d'opérations dans la couche topologique comprend : la création d'une nouvelle couche topologique, et le transfert d'une opération dépassant la capacité de mémoire de la GPU dans la couche topologique d'origine et d'une opération non associée à l'opération dépassant la capacité de mémoire de la GPU dans une couche topologique suivante vers la nouvelle couche topologique ; et
dans lequel les opérations comprennent en outre :
le déplacement de tenseurs vers la GPU après la détermination du fait que des copies dans la GPU ont été épuisées.

3. Support de stockage lisible par ordinateur comprenant des instructions qui, lorsqu'elles sont exécutées par un processeur, amènent le processeur à mettre en œuvre des opérations comprenant la mise en œuvre des étapes suivantes sur chaque couche topologique :
l'agencement de tenseurs dans un ordre croissant selon des numéros de série de couches topologiques où les tenseurs sont requis ;
le déplacement de manière séquentielle des tenseurs vers une unité de traitement graphique, GPU, selon l'agencement, et le fait de déterminer si une somme des tenseurs déjà déplacés vers la GPU dépasse un seuil ;
en réponse au fait qu'une somme d'une taille des tenseurs déjà déplacés vers la GPU dépasse le seuil, le déplacement d'une partie excédentaire vers une unité centrale de traitement, CPU, et le fait de déterminer si une couche topologique actuelle est une dernière couche topologique ; et
en réponse au fait que la couche topologique actuelle est la dernière couche topologique, la correction d'un tenseur avec une anomalie de position ;
dans lequel la correction d'un tenseur avec une anomalie de position comprend :
le fait de déterminer s'il y a un quelconque tenseur avec une anomalie de position dans la GPU ;
en réponse au fait qu'il y a un tenseur avec une anomalie de position dans la GPU, la suppression du tenseur, et le fait de déterminer s'il y a un quelconque tenseur avec une anomalie de position dans la CPU ; et
le fait de déterminer s'il y a un espace dans la GPU ; et
en réponse au fait qu'il y a l'espace dans la GPU, le déplacement du tenseur vers la GPU ;
dans lequel le fait de déterminer s'il y a un quelconque tenseur avec une anomalie de position dans la GPU comprend : le fait de déterminer si une position du tenseur dans une couche topologique suivante est dans la CPU ; et
dans lequel une base pour la détermination du fait qu'une position d'un tenseur dans la GPU peut être antérieure est qu'elle est actuellement dans la CPU mais qu'une position suivante de celle-ci est dans la GPU ;
dans lequel les opérations comprennent en outre :
en réponse au fait qu'il n'y a pas de tenseur avec une anomalie de position dans la GPU, le fait de déterminer si une mémoire requise par la couche topologique dépasse une capacité de mémoire de la GPU ; en réponse au fait que la mémoire requise par la couche topologique dépasse la capacité de mémoire de la GPU, la réaffectation d'opérations dans la couche topologique ;
dans lequel la réaffectation d'opérations dans la couche topologique comprend :
la création d'une nouvelle couche topologique, et le transfert d'une opération dépassant la capacité de mémoire de la GPU dans la couche topologique d'origine et d'une opération non associée à l'opération dépassant la capacité de mémoire de la GPU dans une couche topologique suivante vers la nouvelle couche topologique ; et
dans lequel les opérations comprennent en outre :
le déplacement de tenseurs vers la GPU après la détermination du fait que des copies dans la GPU ont été épuisées.
